# NEW EUROPEAN PATENT SPECIFICATION

(11) **EP 2 554 887 B2**
(45) Date of publication and mention of the opposition decision: **20.09.2023**
(45) Mention of the grant of the patent: 09.08.2017
(21) Application number: 11762384.3
(22) Date of filing: 16.02.2011
(51) Int. Cl.: B32B 7/10, B32B 1/08, B32B 27/34, B32B 27/08, B32B 27/18, F16L 11/04, B32B 27/30, B32B 27/32

(54) **FUEL HOSE AND METHOD FOR PRODUCING SAME**
KRAFTSTOFFSCHLAUCH UND DESSEN HERSTELLUNGSVERFAHREN
TUYAU DE CARBURANT ET SON PROCÉDÉ DE PRODUCTION

(30) Priority: 31.03.2010 JP 2010080416
(43) Date of publication of application: 06.02.2013
(73) Proprietor: Sumitomo Riko Company Limited, Komaki, Aichi (JP)
(72) Inventor: MIZUTANI Koji, Komaki-shi Aichi 485-8550 (JP); KATAYAMA Kazutaka, Komaki-shi Aichi 485-8550 (JP); TAMURA Daigo, Komaki-shi Aichi 485-8550 (JP); KASAHARA Kazuhito, Komaki-shi Aichi 485-8550 (JP); TAKIMOTO Yorihiro, Komaki-shi Aichi 485-8550 (JP)
(74) Representative: Müller-Boré & Partner Patentanwälte PartG mbB
(86) International application number: PCT/JP2011/053278
(87) International publication number: WO 2011/122143

(56) References cited:
- EP-A1- 1 695 817
- EP-A1- 1 741 549
- EP-A1- 1 741 549
- EP-A1- 2 025 718
- WO-A1-2008/038310
- JP-A- 2004 123 773
- JP-A- 2004 203 012
- JP-A- 2007 090 563
- US-A1- 2004 126 523
- US-A1- 2004 126 523
- US-A1- 2009 297 749
- US-A1- 2009 297 749

## Description

The present invention relates to a fuel hose used as a transport hose for automotive fuels or the like (e.g., gasoline, alcohol-blended gasoline, and diesel fuel) and to a method for producing the fuel hose.

In recent years, in the automobile industry, the evaporation of fuel gas has been increasingly strictly regulated, and various low-permeation fuel hoses that satisfy the strict regulation have been investigated.. Hoses made of a fluorocarbon resin have been mainly used as fuel hoses. However, when low fuel permeability is more strictly required, the thickness of the fluorocarbon resin layer needs to be increased and thus the cost of hoses increases. Therefore, aromatic polyamide resins such as polyphenylene sulfide resin (PPS) and polyamide 9T (PA9T) and aromatic polyester resins such as polybutylene terephthalate (PBT) have been receiving attention as resins that are cheaper than fluorocarbon resins and that have good low fuel permeability. Various hoses including a low-fuel-permeability layer composed of the above-described resin have been proposed recently (e.g., refer to PTLs 1 to 3).

### Patent Literature

PTL 1: Japanese Unexamined Patent Application Publication No. 10-138372
PTL 2: Japanese Unexamined Patent Application Publication No. 2003-287165
PTL 3: Japanese Unexamined Patent Application Publication No. 2003-110736

An aromatic polyamide resin such as PA9T that particularly has good low fuel permeability and is used as a material for hoses has high rigidity. A single layer hose composed of only the aromatic polyamide resin has poor flexibility and, particularly, is vulnerable to a shock at low temperature, which easily causes the breakage of hoses. To solve the problem, there has been considered a hose having a layered structure in which the thickness of the aromatic polyamide resin layer is decreased and an outer layer composed of a flexible thermoplastic resin such as an aliphatic polyamide resin or a polyethylene resin is formed on the outer peripheral surface of the aromatic polyamide resin layer. However, the aromatic polyamide resin has poor adhesion with other materials. When the inner layer and the outer layer are laminated with each other, an adhesive layer normally needs to be formed at an interface between the layers. This poses problems in that the production process becomes complicated due to the formation of the adhesive layer and the weight of hoses is increased.

In view of the foregoing, an object of the present invention is to provide a fuel hose having good low fuel permeability and interlayer adhesion and a method for producing the fuel hose.

To achieve the object above, according to a first aspect of the present invention, a fuel hose includes a tube-shaped inner layer made of a resin composition (A) below and an outer layer formed on an outer peripheral surface of the inner layer and made of a resin composition (B) below, wherein the inner layer and the outer layer are bonded to each other through interlayer adhesion.
1. (A) a resin composition that contains an aromatic polyamide resin, wherein the aromatic polyamide resin is selected from the group consisting of polyamide 4T (PA4T), polyamide 6T (PA6T), polyamide MXD6 (PAMXD6), polyamide 9T (PA9T), polyamide 10T (PA10T), polyamide 11T (PA11T), polyamide 12T (PA12T), and polyamide 13T (PA13T), alone or in combination, as a main component, wherein the content of the main component is 50% or more by weight, and an organic acid salt having 10 to 28 carbon atoms, wherein the organic acid salt is calcium stearate (C18) or zinc stearate (C18)
2. (B) a resin composition that contains an aliphatic polyamide resin as a main component, wherein the content of the main component is 50% or more by weight

According to a second aspect of the present invention, a method for producing the fuel hose according to the first aspect includes coextruding the resin composition (A) for forming the inner layer and the resin composition (B) for forming the outer layer by melt extrusion.

The inventors of the present invention have eagerly studied to solve the problems above. Regarding the hose having a layered structure in which an outer layer composed of an aliphatic polyamide resin such as PA12 is formed on the outer peripheral surface of an inner layer composed of an aromatic polyamide resin such as PA9T having good low fuel permeability, the inventors have focused on an improvement in the interlayer adhesion between the inner layer and the outer layer. In the process of the study, the inventors have found that poor interlayer adhesion between the inner layer and the outer layer in the above-described hose having a layered structure is caused, for example, due to the following reason. That is, the amide bond (-CONH-) of the aliphatic polyamide resin.serving as a material for the outer layer is easily cleaved (-CO NH-) through heat fusion during melt extrusion whereas the amide bond of the aromatic polyamide resin serving as a material for the inner layer is not easily cleaved only through heat fusion. As a result of further study, the inventors have found the following and have completed the present invention. That is, by blending a certain organic acid salt in the material for the inner layer, the amide bond of the aromatic polyamide resin serving as a material for the inner layer is easily cleaved (the organic acid salt is dissociated by heat during molding processing, and an acid generated through the dissociation of the organic acid salt easily causes the cleavage of the amide bond). Near the head of an extruder, the -CO NH- obtained by the cleavage of the amide bonds of both the layers form amide bonds again in the inner layer, in the outer layer, and between the inner layer and the outer layer (amide-converting reaction). Therefore, a desired interlayer adhesive strength is achieved.

As described above, the fuel hose of the present invention includes a tube-shaped inner layer made of a resin composition that contains an aromatic polyamide resin, such as PA9T, as a main component and an outer layer made of a resin composition that contains an aliphatic polyamide resin as a main component, the resin composition for forming the inner layer containing an organic acid salt having 10 to 28 carbon atoms, wherein the organic acid salt is a calcium or zinc salt of a saturated fatty acid. Therefore, the fuel hose of the present invention is a lightweight fuel hose having good interlayer adhesion, low fuel permeability, flexibility, low-temperature shock resistance, and heat resistance. In the fuel hose of the present invention, the layers can be bonded to each other without using an adhesive and the cost of materials is low. Thus, a fuel hose with high performance can be produced at low cost.

When the fuel hose further includes an innermost layer on an inner peripheral surface of the inner layer, the innermost layer being composed of a fluorocarbon resin, better low fuel permeability is achieved.

In the fuel hose, the resin composition for forming the inner layer and the resin composition for forming the outer layer are coextruded by melt extrusion, whereby the inner layer and the outer layer are bonded to each other through interlayer adhesion without using an adhesive due to the effect of the organic acid salt contained in the material for the inner layer.

### Brief Description of Drawing

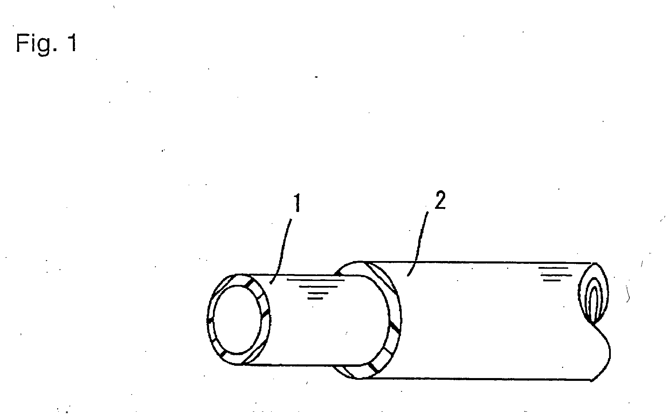

[Fig. 1] Fig. 1 shows an example of a fuel hose of the present invention.

An embodiment of the present invention will now be described.

As shown in Fig. 1, a fuel hose of the present invention includes a tube-shaped inner layer 1 that allows fuel to flow therein and an outer layer 2 formed on the outer peripheral surface of the inner layer 1. The inner layer 1 is made of a resin composition (A) below. The outer layer 2.is made of a resin composition (B) below. In this fuel hose, the inner layer 1 and the outer layer 2 are bonded to each other through interlayer adhesion. Note that the term "main component" of the resin compositions (A) and (B) below is a component that significantly affects the characteristics of the entire resin composition. In the present invention, the content of the main component is 50% or more by weight.
1. (A) a resin composition that contains an aromatic polyamide resin as a main component, wherein the aromatic polyamide resin is selected from the group consisting of polyamide 4T (PA4T), polyamide 6T (PA6T), polyamide MXD6 (PAMXD6), polyamide 9T (PA9T), polyamide 10T (PA10T), polyamide 11T (PA11T), polyamide 12T (PA12T), and polyamide 13T (PA13T), alone or in combination, and an organic acid salt having 10 to 28 carbon atoms, wherein the organic acid salt is calcium stearate (C18) or zinc stearate (C18)
2. (B) a resin composition that contains an aliphatic polyamide resin as a main component

According to the present invention, the aromatic polyamide resin used as a material for the inner layer 1 is selected from the group consisting of polyamide 4T (PA4T), polyamide 6T (PA6T), polyamide MXD6 (PAMXD6), polyamide 9T (PA9T), polyamide 10T (PA10T), polyamide 11T (PA11T), polyamide 12T (PA12T), and polyamide 13T (PA13T). These resins may be used alone or in combination. In particular, PA9T is preferably used in terms of flexibility and barrier property.

As described above, the organic acid salt having 10 to 28 carbon atoms is blended in the material for the inner layer 1. The organic acid salt preferably has 10 to 26 carbon atoms. If the number of carbon atoms is less than 10, an organic acid generated through dissociation of the organic acid salt is gasified at an extrusion temperature and left in the aromatic polyamide resin in the form of foam. As a result, a regular molded product is not obtained. If the number of carbon atoms is more than 28, the activity of the organic acid generated through dissociation of the organic acid salt is decreased, and thus the cleavage effect on an amide bond of the aromatic polyamide resin is decreased. As a result, a desired interlayer adhesion effect is not achieved. In view of the foregoing, the organic acid salt is zinc stearate (C18) or calcium stearate (C18). Zinc stearate and calcium stearate are used because they are decomposed at a melting temperature (about 300°C) of the aromatic polyamide resin during melt extrusion and have high reactivity (cleavage effect on an amide bond caused by an acid generated from the organic acid salt) with the aromatic polyamide resin.

The content of the organic acid salt in the resin composition (A) serving as a material for the inner layer 1 is preferably 0.05 to 5% by weight and more preferably 0.1 to 1% by weight. If the content is less than 0.05% by weight, a desired interlayer adhesion effect produced by the organic acid salt is not achieved. If the content is more than 5% by weight, the dissociation of amide bonds proceeds more favorably than the recombination thereof near the adhesive interface due to an acid generated through dissociation of an excessive amount of organic acid salt. As a result, a desired interlayer adhesion effect is also not achieved.

Examples of the aliphatic polyamide resin used as a material for the outer layer 2 include polyamide 46 (PA46), polyamide 6 (PA6), polyamide 66 (PA66), polyamide 99 (PA99), polyamide 610 (PA610), polyamide 612 (PA612), polyamide 11 (PA11), polyamide 912 (PA912), polyamide 12 (PA12), a copolymer (PA6/66) of polyamide 6 and polyamide 66, and a copolymer (PA6/12) of polyamide 6 and polyamide 12. These resins may be used alone or in combination.

In addition to the resin, which is a main component, and the organic acid salt added to the resin, the following additives may be optionally added to the material for the inner layer 1 and the material for the outer layer 2. Examples of the additives include pigments such as carbon black and titanium oxide; fillers such as calcium carbonate; plasticizers such as fatty acid esters, mineral oil, and butylbenzene sulfonamide; hindered phenol antioxidants; antioxidants such as phosphorus-based heat stabilizers; heat aging resistive agents; shock absorbers such as α-polyolefin; ultraviolet absorbers; antistatic agents; reinforcing agents such as organic fiber, glass fiber, carbon fiber, and metal whisker; and flame retardants.

The fuel hose of the present invention shown in Fig. 1 can be produced as follows. The material for the inner layer 1 and the material for the outer layer 2 described above are prepared. The layer forming materials are coextruded with, for example, an extruder (multilayer extruder manufactured by Research Laboratory of Plastics Technology Co., Ltd.) while being melt-kneaded (the material for the inner layer is kneaded at 260 to 330°C and the material for the outer layer is kneaded at 200 to 250°C). The coextruded molten tube is then made to pass through a sizing die, and thus a fuel hose having a two-layer structure in which the outer layer 2 is formed on the outer peripheral surface of the inner layer 1 can be produced. Through this melt extrusion (coextrusion), the inner layer 1 and the outer layer 2 are satisfactorily bonded to each other due to the effect of the organic acid salt contained in the material for the inner layer 1.

In the case where a fuel hose having a pleated shape is produced, the coextruded molten tube is made to pass through a corrugating machine, and thus a pleated hose with a predetermined size can be produced.

In the thus-obtained fuel hose of the present invention, the inner diameter is preferably 1 to 40 mm and more preferably 2 to 36 mm. The outer diameter is preferably 2 to 44 mm and more preferably 3 to 40 mm. The thickness of the inner layer 1 is preferably 0.02 to 1.0 mm and more preferably 0.05 to 0.6 mm. The thickness of the outer layer 2 is preferably 0.03 to 1.5 mm and more preferably 0.05 to 1.0 mm.

The structure of the fuel hose of the present invention is not limited to the two-layer structure shown in Fig. 1, and may be a three-layer structure in which, for example, an innermost layer is formed on the inner peripheral surface of the inner layer 1.

The innermost layer is preferably composed of a fluorocarbon resin because the fuel hose of the present invention has better low fuel permeability. Examples of the fluorocarbon resin include polyvinyl fluoride (PVF), polyvinylidene fluoride (PVDF), polychlorotrifluoroethylene (CTFE), and polytetrafluoroethylene (PTFE); copolymers such as a tetrafluoroethylene-hexafluoropropylene copolymer (FEP), a tetrafluoroethylene-perfluoroalkylvinylether copolymer (PFA), a tetrafluoroethylene-hexafluoropropylene-vinylidene fluoride copolymer (THV), an ethylene-tetrafluoroethylene copolymer (ETFE), and an ethylene-polychlorotrifluoroethylene copolymer (ECTFE); modified copolymers thereof; various graft polymers and blends; and conductive fluorocarbon resins to which conductivity is imparted by adding carbon black, carbon fiber, carbon nanotube, a conductive polymer, or the like to the above resin. These resins may be used alone or in combination.

The fuel hose of the present invention including the innermost layer formed on the inner peripheral surface of the inner layer 1 can be produced as follows. A material for the innermost layer is prepared together with the material for the inner layer 1 and the material for the outer layer 2. On the basis of the production method described above, the materials for the innermost layer, inner layer 1, and outer layer 2 are coextruded. Alternatively, the material for the innermost layer is extruded with an extruder for the innermost layer so that the innermost layer is formed on the inner peripheral surface of the inner layer 1 that has been extruded by the production method described above. The resultant molten tube is made to pass through a sizing die, and thus a fuel hose including the innermost layer formed on the inner peripheral surface of the inner layer 1 can be produced.

In the fuel hose of the present invention, the thickness of the innermost layer is preferably 0.03 to 0.5 mm and more preferably 0.05 to 0.3 mm. In the fuel hose of the present invention including the innermost layer, the preferred ranges of the thicknesses of the inner layer 1 and outer layer 2 and the inner diameter and outer diameter of hoses are the same as those described above.

The fuel hose of the present invention may optionally include, for example, an outermost layer composed of a proper material and formed on the outer peripheral surface of the outer layer 2.

The fuel hose of the present invention is suitably used as a transport hose for automotive fuels such as gasoline, alcohol-blended gasoline, diesel fuel, compressed natural gas (CNG), and liquefied petroleum gas (LPG), but is not limited thereto. The fuel hose of the present invention can also be used as a transport hose for fuel-cell-powered vehicle fuels such as methanol, hydrogen, and dimethyl ether (DME).

### Examples

Examples will now be described together with Comparative Examples. The present invention is not limited to Examples.

First, the following materials were prepared prior to Examples and Comparative Examples.
[PA9T (i)]
   Genestar N1001A (melting point: 304°C) manufactured by KURARAY CO., LTD.
[PA9T (ii)]
   Genestar N1001D (melting point: 262°C) manufactured by KURARAY CO., LTD.
[PA6T]
   ARLEN AE4200 manufactured by Mitsui Chemicals, Inc.
[MXD6]
   Reny S6007 manufactured by MITSUBISHI GAS CHEMICAL COMPANY, INC.
[PA10T]
   Rilsan HT manufactured by Arkema K.K.
[Organic acid salt (i)]
   Zinc stearate manufactured by Wako Pure Chemical Industries, Ltd.
[Organic acid salt (ii)]
   Zinc laurate manufactured by Wako Pure Chemical Industries, Ltd.
[Organic acid salt (iii)]
   Zinc octanoate manufactured by Wako Pure Chemical Industries, Ltd.
[Organic acid salt (iv)]
   Calcium stearate manufactured by Wako Pure Chemical Industries, Ltd.
[Organic acid salt (v)]
   Copper (II) stearate manufactured by Wako Pure Chemical Industries, Ltd.
[Organic acid salt (vi)]
   ZS-8 (zinc montanate) manufactured by NITTO KASEI KOGYO K.K.
[Organic acid salt (vii)]
   Zinc hexanoate manufactured by Mitsuwa Chemicals Co., Ltd.
[PA12]
   Rilsan AESN NOIR P20TL manufactured by Arkema K.K.
[PA610]
   Amilan CM2402 manufactured by Toray Industries, Inc.
[PA612]
   UBE Nylon 7034U manufactured by Ube Industries, Ltd.
[Shock absorber]
   Tafmer A-4085 (α-polyolefin) manufactured by Mitsui Chemicals, Inc.
[Plasticizer]
   Butylbenzene sulfonamide manufactured by Wako Pure Chemical Industries, Ltd.
[Heat aging resistive agent]
   IRGANOX 1010 manufactured by Ciba Japan
[Fluorocarbon resin]
   Neoflon RP5000 manufactured by DAIKIN INDUSTRIES, Ltd.
[Conductive fluorocarbon resin]
   Neoflon RP5000AS manufactured by DAIKIN INDUSTRIES, Ltd.

A hose was then produced using the above materials as described below.

### [Examples 1 to 3, 6 to 11, 13, 14 and 16 to 21 as working examples, Examples 4, 5, 12 and 15 as reference examples (not falling within the scope of the present invention), and Comparative Examples 1 and 2]

Materials for an innermost layer (only Examples 16 to 21), materials for an inner layer, and materials for an outer layer shown in Tables 1 to 5 below were prepared. These materials were melt-kneaded and coextruded using an extruder (multilayer extruder manufactured by Research Laboratory of Plastics Technology Co., Ltd.) to produce a smooth hose having an inner diameter of 6 mm. When the smooth hose had a two-layer structure, the thickness of the inner layer was 0.3 mm and the thickness of the outer layer was 0.7 mm. When the smooth hose had a three-layer structure, the thickness of the innermost layer was 0.05 mm, the thickness of the inner layer was 0.25,mm, and the thickness of the outer layer was 0.7 mm.

**[Table 1]**

| | Example | | | | |
|---|---|---|---|---|---|
| | 1 | 2 | 3 | 4* | 5* |
| Material for inner layer | PA9T (i) | PA9T (i) | PA9T (i) | PA9T (i) | PA9T (i) |
| | 99.95 wt% | 99.5 wt% | 95.0 wt% | 99.5 wt% | 99.5 wt% |
| | Organic acid salt (i) | Organic acid salt (i) | Organic acid salt (i) | Organic acid salt (ii) | Organic acid salt (iii) |
| | 0.05 wt% | 0.5wt% | 5.0 wt% | 0.5 wt% | 0.5 wt% |
| Material for outer layer | PA12 | PA12 | PA12 | PA12 | PA12 |
| | 100 wt% | 100 wt% | 100 wt% | 100 wt% | 100 wt% |
| * reference example (not falling within the scope of the present invention) | | | | | |

**[Table 2]**

| | Example | |
|---|---|---|
| | 6 | 7 |
| Material for inner layer | PA9T (i) | PA9T (i) |
| | 99.5 wt% | 99.5 wt% |
| | Organic acid salt (i) | Organic acid salt (i) |
| | 0.5 wt% | 0.5 wt% |
| Material for outer layer | PA610 | PA612 |
| | 79.95 wt% | 79.95 wt% |
| | Shock absorber | Shock absorber |
| | 10.0 wt% | 10.0 wt% |
| | Plasticizer | Plasticizer |
| | 10.0 wt% | 10.0 wt% |
| | Heat aging resistive agent | Heat aging resistive agent |
| | 0.05 wt% | 0.05 wt% |

**[Table 3]**

| | Example | | | | | | | |
|---|---|---|---|---|---|---|---|---|
| | 8 | 9 | 10 | 11 | 12* | 13 | 14 | 15* |
| Material for inner layer | PA6T | MXD6 | PA10T | PA9T (i) | PA9T (i) | PA9T (i) | PA9T (i) | PA9T (i) |
| | 99.5 wt% | 99.5 wt% | 99.5 wt% | 99.5 wt% | 99.5 wt% | 99.99 wt% | 90.0 wt% | 99.5 wt% |
| | Organic acid salt (i) | Organic acid salt (i) | Organic acid salt (i) | Organic acid salt (iv) | Organic acid salt (v) | Organic acid salt (i) | Organic acid salt (i) | Organic acid salt (vi) |
| | 0.5 wt% | 0.5 wt% | 0.5 wt% | 0.5 wt% | 0.5 wt% | 0.01 wt% | 10.0 wt% | 0.5 wt% |
| Material for outer layer | PA12 | PA12 | PA12 | PA12 | PA12 | PA12 | PA12 | PA12 |
| | 100 wt% | 100 wt% | 100 wt% | 100 wt% | 100 wt% | 100 wt% | 100 wt% | 100 wt% |
| * reference example (not falling within the scope of the present invention) | | | | | | | | |

**[Table 4]**

| | Example | | | | | |
|---|---|---|---|---|---|---|
| | 16 | 17 | 18 | 19 | 20 | 21 |
| Material for innermost layer | Fluorocarbon resin | Conductive fluorocarbon resin | Fluorocarbon resin | Fluorocarbon resin | Fluorocarbon resin | Fluorocarbon resin |
| | 100 wt% | 100 wt% | 100 wt% | 100 wt% | 100 wt% | 100 wt% |
| Material for inner layer | PA9T (i) | PA9T (i) | PA9T (i) | PA9T (i) | PA9T (ii) | PA9T (ii) |
| | 99.5 wt% | 99.5 wt% | 99.5 wt% | 99.5 wt% | 99.5 wt% | 99.5 wt% |
| | Organic acid salt (i) | Organic acid salt (i) | Organic acid salt (i) | Organic acid salt (i) | Organic acid salt (i) | Organic acid salt (i) |
| | 0.5 wt% | 0.5 wt% | 0.5 wt% | 0.5 wt% | 0.5 wt% | 0.5 wt% |
| Material for outer layer | PA12 | PA12 | PA610 | PA612 | PA610 | PA612 |
| | 100 wt% | 100 wt% | 79.95 wt% | 79.95 wt% | 79.95 wt% | 79.95 wt% |
| | - | - | Shock absorber | Shock absorber | Shock absorber | Shock absorber |
| | - | - | 10.0 wt% | 10.0 wt% | 10.0 wt% | 10.0 wt% |
| | - | - | Plasticizer | Plasticizer | Plasticizer | Plasticizer |
| | - | - | 10.0 wt% | 10.0 wt% | 10.0 wt%. | 10.0 wt% |
| | - | - | Heat aging resistive agent | Heat aging resistive agent | Heat aging resistive agent | Heat aging resistive agent |
| | - | - | 0.05 wt% | 0.05 wt% | 0.05 wt% | 0.05 wt% |

**[Table 5]**

| | Comparative Example | |
|---|---|---|
| | 1 | 2 |
| Material for inner layer | PA9T (i) | PA9T (i) |
| | 100 wt% | 99.95 wt% |
| | - | Organic acid salt (vii) |
| | - | 0.05 wt% |
| Material for outer layer | PA12 | PA12 |
| | 100 wt% | 100 wt% |

The characteristics of the thus-obtained hoses of Examples and Comparative Examples were evaluated in accordance with the criteria below. Tables 6 to 9 collectively show the results.

### [Fuel permeation rate]

Regarding each of the hoses, the permeation coefficient (unit: mg/m/day) of an alcohol-blended model gasoline obtained by mixing toluene/isooctane/ethanol at a volume ratio of 45:45:10 was measured at 40°C for one month using a constant-pressure permeation rate measuring apparatus for hoses (GTR-TUBE3-TG manufactured by GTR Tec Corporation). The value shown in Tables is a value when equilibrium is reached. When the value was less than 50 (mg/m/day), an evaluation of "○" was given. When the value was 50 (mg/m/day) or more, an evaluation of "x" was given.

### [Interlayer adhesive strength]

Each of the hoses was cut into strips having a width of 10 mm to obtain a sample. The sample was delaminated into its constituent layers (inner layer/outer layer in Examples 1 to 14 and Comparative Examples 1 and 2, innermost layer/inner layer and inner layer/outer layer in Examples 15 to 20). The layers were then each set in a chuck of a tensile testing machine, and 180° peel strength (N/cm) was measured at a cross head speed of 50 mm/minute. In terms of interlayer adhesion, when the peel strength was 20 N/cm or more, an evaluation of "○" was given. When the peel strength was 15 N/cm or more and less than 20 N/cm, an evaluation of "Δ" was given. When the peel strength was 10 N/cm or more and less than 15 N/cm, an evaluation of "ΔΔ" was given. When the peel strength was less than 10 N/cm, an evaluation of "x" was given. In the present invention, an evaluation of "○", "Δ", or "ΔΔ" is required.

**[Table 6]**

| | | Example | | | | | | |
|---|---|---|---|---|---|---|---|---|
| | | 1 | 2 | 3 | 4* | 5* | 6 | 7 |
| Fuel permeation rate (mg/m/day) | | 8.3 | 8.6 | 8.7 | 8.9 | 8.6 | 8.6 | 8.7 |
| | Evaluation | ○ | ○ | ○ | ○ | ○ | ○ | ○ |
| Interlayer adhesive strength (N/cm) | Inner layer /Outer layer | 15 | 24 | 18 | 27 | 29 | 21 | 18 |
| | Evaluation | Δ | ○ | Δ | ○ | ○ | ○ | Δ |

**[Table 7]**

| | | Example | | | | | | | |
|---|---|---|---|---|---|---|---|---|---|
| | | 8 | 9 | 10 | 11 | 12* | 13 | 14 | 15* |
| Fuel permeation rate (mg/m/day) | | 7.6 | 9.2 | 9.2 | 8.9 | 8.5 | 8.6 | 8.2 | 8.9 |
| | Evaluation | ○ | ○ | ○ | ○ | ○ | ○ | ○ | ○ |
| Interlayer adhesive strength (N/cm) | Inner layer /Outer layer | 20 | 18 | 20 | 22 | 16 | 10 | 13 | 22 |
| | Evaluation | ○ | Δ | ○ | ○ | Δ | ΔΔ | ΔΔ | ○ |
| * reference example (not falling within the scope of the present invention) | | | | | | | | | |

**[Table 8]**

| | | | Example | | | | | |
|---|---|---|---|---|---|---|---|---|
| | | | 16 | 17 | 18 | 19 | 20 | 21 |
| Fuel permeation rate (mg/m/day) | | | 8.3 | 8.4 | 8.6 | 8.5 | 12.2 | 12.3 |
| | | Evaluation | ○ | ○ | ○ | ○ | ○ | ○ |
| Interlayer adhesive strength (N/cm) | Innermost layer/Inner layer | | 24 | 25 | 21 | 23 | 28 | 27 |
| | Inner layer /Outer layer | | 24 | 25 | 22 | 22 | 26 | 25 |
| | Evaluation | | ○ | ○ | ○ | ○ | ○ | ○ |

**[Table 9]**

| | | | Comparative Example | |
|---|---|---|---|---|
| | | | 1 | 2 |
| Fuel permeation rate (mg/m/day) | | | 8.6 | * |
| | | Evaluation | ○ | × |
| Interlayer adhesive strength (N/cm) | Inner layer /Outer layer | | 0.9 | * |
| | Evaluation | | × | × |
| *Foaming occurred in the inner layer and thus the hose could not be molded. | | | | |

As is clear from the results above, the hoses of Examples 1 to 21 each had a low fuel permeation rate and good interlayer adhesion.

In contrast, the hose of Comparative Example 1 had a layered structure including a PA9T inner layer and a PA12 outer layer as in the hoses of Examples, but a certain organic acid salt was not contained in the material for the inner layer. Thus, the interlayer adhesion achieved in Examples was not provided. The hose of Comparative Example 2 could not be molded because foaming occurred in the inner layer.

In Examples above, specific configurations of the present invention have been described. However, Examples above are merely examples and the present invention should not be interpreted in a restrictive manner. Furthermore, all modifications and alterations within the scope of the claims are within the scope of the present invention.

The fuel hose of the present invention can be suitably used as a transport hose for automotive fuels such as gasoline, alcohol-blended gasoline, diesel fuel, compressed natural gas (CNG), and liquefied petroleum gas (LPG).

### Reference Signs List

- 1: inner layer
- 2: outer layer

## Claims

1. A fuel hose comprising a tube-shaped inner layer made of a resin composition (A) below and an outer layer formed on an outer peripheral surface of the inner layer and made of a resin composition (8) below,
(A) a resin composition that contains an aromatic polyamide resin,
wherein the aromatic polyamide resin is selected from the group consisting of polyamide 4T (PA4T), polyamide 6T (PA6T), polyamide MXD6 (PAMXD6), polyamide 9T (PA9T), polyamide 10T (PA10T), polyamide 11T (PA11T), polyamide 12T (PA12T), and polyamide 13T (PA13T), alone or in combination, as a main component, wherein the content of the main component is 50% or more by weight, and an organic acid salt having 10 to 28 carbon atoms
(B) a resin composition (8) that contains an aliphatic polyamide resin as a main component, wherein the content of the main component is 50% or more by weight
wherein the inner layer and the outer layer are bonded to each other through interlayer adhesion, and
wherein the organic acid salt contained in the resin composition (A) is calcium stearate (C18) or zinc stearate (C18).

2. The fuel hose according to Claim 1, wherein the aromatic polyamide resin serving as a main component of the resin composition (A) is polyamide 9T (PA9T).

3. The fuel hose according to Claim 1 or 2, wherein the content of the organic acid salt in the resin composition (A) is 0.05 to 5% by weight.

4. The fuel hose according to any one of Claims 1 to 3, further comprising an innermost layer on an inner peripheral surface of the inner layer, the innermost layer being composed of a fluorocarbon resin.

5. A method for producing the fuel hose according to any one of Claims 1 to 4, the method comprising coextruding the resin composition (A) for forming the inner layer and the resin composition (8) for forming the outer layer by melt extrusion.

## Patentansprüche

1. Kraftstoffschlauch, umfassend eine röhrenförmige Innenschicht, hergestellt aus einer nachstehenden Harzzusammensetzung (A), und eine Außenschicht, ausgebildet auf einer äußeren Umfangsoberfläche der Innenschicht und hergestellt aus einer nachstehenden Harzzusammensetzung (B),
(A) eine Harzzusammensetzung, welche ein aromatisches Polyamidharz,
wobei das aromatische Polyamidharz aus der Gruppe, bestehend aus Polyamid 4T (PA4T), Polyamid 6T (PA6T), Polyamid MXD6 (PAMXD6), Polyamid 9T (PA9T), Polyamid 10T (PA10T), Polyamid 11T (PA11T), Polyamid 12T (PA12T) und Polyamid 13T (PA13T), allein oder in Kombination, ausgewählt ist, als eine Hauptkomponente, wobei der Gehalt der Hauptkomponente 50 Gewichts% oder mehr beträgt, und ein organisches Säuresalz mit 10 bis 28 Kohlenstoffatomen enthält
(B) eine Harzzusammensetzung (B), welche ein aliphatisches Polyamidharz als eine Hauptkomponente, wobei der Gehalt der Hauptkomponente 50 Gewichts% oder mehr beträgt, enthält,
wobei die Innenschicht und die Außenschicht miteinander durch Zwischenschichtadhäsion verbunden sind und
wobei das organische Säuresalz, enthalten in der Harzzusammensetzung (A), Calciumstearat (C18) oder Zinkstearat (C18) ist.

2. Kraftstoffschlauch nach Anspruch 1, wobei das aromatische Polyamidharz, welches als eine Hauptkomponente der Harzzusammensetzung (A) dient, Polyamid 9T (PA9T) ist.

3. Kraftstoffschlauch nach Anspruch 1 oder 2, wobei der Gehalt des organischen Säuresalzes in der Harzzusammensetzung (A) 0,05 bis 5 Gewichts% beträgt.

4. Kraftstoffschlauch nach einem der Ansprüche 1 bis 3, weiter umfassend eine innerste Schicht auf einer inneren Umfangsoberfläche der Innenschicht, wobei die innerste Schicht aus einem Fluorkohlenstoffharz gebildet ist.

5. Verfahren zur Herstellung des Kraftstoffschlauches nach einem der Ansprüche 1 bis 4, wobei das Verfahren das Koextrudieren der Harzzusammensetzung (A) zum Ausbilden der Innenschicht und der Harzzusammensetzung (B) zum Ausbilden der Außenschicht durch Schmelzextrusion umfasst.

## Revendications

1. Un tuyau de carburant comprenant une couche intérieure de forme tubulaire faite d'une composition de résine (A) ci-après et une couche extérieure formée sur une surface périphérique extérieure de la couche intérieure et faite d'une composition de résine (B) ci-après,
(A) une composition de résine qui comprend une résine de polyamide aromatique,
dans laquelle la résine de polyamide aromatique est sélectionnée parmi le groupe composé des suivants: polyamide 4T (PA4T), polyamide 6T (PA6T), polyamide MXD6 (PAMXD6), polyamide 9T (PA9T), polyamide 10T (PA10T), polyamide 11T (PA11T), polyamide 12T (PA12T) et polyamide 13T (PA13T), seuls ou en combinaison, comme composant principal, où la teneur en composant principal est de 50% ou plus en poids, et un sel d'acide organique ayant de 10 à 28 atomes de carbone
(B) une composition de résine (B) qui comprend une résine de polyamide aliphatique comme composant principal, dans laquelle la teneur en composant principal est de 50% ou plus en poids
dans lequel la couche intérieure et la couche extérieure sont liées l'une à l'autre par adhérence intercouche, et
dans lequel le sel d'acide organique comprise dans la composition de résine (A) est le stéarate de calcium (C18) ou le stéarate de zinc (C18).

2. Le tuyau de carburant selon la revendication 1, dans lequel la résine de polyamide aromatique servant de composant principal de la composition de résine (A) est le polyamide 9T (PA9T).

3. Le tuyau de carburant selon la revendication 1 ou 2, dans lequel la teneur en sel d'acide organique dans la composition de résine (A) va de 0,05 à 5% en poids.

4. Le tuyau de carburant selon l'une quelconque des revendications 1 à 3, comprenant en outre une couche plus intérieure sur une surface périphérique intérieure de la couche intérieure, la couche plus intérieure étant composée d'une résine fluorocarbonée.

5. Un procédé de production du tuyau de carburant selon l'une quelconque des revendications 1 à 4, le procédé comprenant la coextrusion de la composition de résine (A) pour former la couche intérieure et de la composition de résine (B) pour former la couche extérieure par extrusion de matière fondue.
